# EUROPÄISCHE PATENTSCHRIFT

(11) **EP 0 479 140 B1**
(45) Veröffentlichungstag und Bekanntmachung des Hinweises auf die Patenterteilung: **02.02.1994**
(21) Anmeldenummer: 91116496.0
(22) Anmeldetag: 27.09.1991
(51) Int. Cl.: B23C 3/34

(54) **Einrichtung zum Einbringen von mehreren Grübchen in eine zylindrische Wandung einer in einem Bauteil vorgesehenen Senkbohrung**
Apparatus for grooving a cylindrical wall of a piece having a blind hole
Appareil à rainurer dans une paroi cylindrique d'une pièce ayant un trou

(30) Priorität: 02.10.1990 DE 4031060
(43) Veröffentlichungstag der Anmeldung: 08.04.1992
(73) Patentinhaber: ABB Reaktor GmbH, D-68167 Mannheim (DE)
(72) Erfinder: Haller, Hans, W-6800 Mannheim 1 (DE); Schreiner, Klaus, W-6720 Speyer (DE)
(74) Vertreter: Rupprecht, Klaus, Dipl.-Ing.

(56) Entgegenhaltungen:
- DE-A- 2 341 396
- DE-A- 3 327 409
- DE-A- 3 723 133
- US-A- 2 166 923

## Beschreibung

Die Erfindung betrifft eine Einrichtung zum Einbringen von mehreren Grübchen in eine zylindrische Wandung einer in einen Bauteil vorgesehenen Senkbohrung mit einer einen Fräser tragenden Frässpindel, die über eine Antriebswelle drehbar ist, sowie mit Antriebsmitteln zur Durchführung einer Linear- und/oder Radialbewegung der Frässpindel; siehe z.B. DE-C 37 23 133.

Bei einer derartigen, allgemein bekannten Einrichtung sind die einzelnen Positionen, an denen umfangsseitig ein Grübchen eingebracht werden muß, nacheinander mit dem Fräser anzufahren. Diese zeitaufwendige und ungenaue (Winkelfehler) Positionierung erfordert ferner noch eine rotierende Bewegung des Halteschaftes parallel zur Innenwandfläche der Senkbohrung um zusammen mit einen aufwendigen Positionsanzeigegerät zur vorgegebenen, auf dem Umfang verteilten Stelle, zum Einbringen des jeweiligen Grübchens zu gelangen.

Es stellt sich die Aufgabe eine Einrichtung der eingangs genannten Art anzugeben, die mit einfachen Positionshilfen das gleichzeitige Einbringen aller auf den Umfang der zylindrischen Wandung der Senkbohrung verteilten Grübchen ermöglicht.

Gelöst wird diese Aufgabe erfindungsgemäß dadurch, daß ein Auslenkkörper von einer der Anzahl der gleichzeitig einzubringenden Grübchen entsprechenden Anzahl von planetenartig zu einer zentralen Steuerstange angeordneten Frässpindeln durchsetzt ist, daß der Auslenkkörper mit einem der Senkbohrung zugewandten Zentrierstück und einem der Senkbohrung abgewandten Zwischenstück verbunden ist, das seinerseits mit einem Getriebegehäuse eine Art Zylinder-/Kolbenverbindung eingeht, daß die Steuerstange mit ihrem einen Ende am Getriebegehäuse befestigt ist und mit ihrem anderen freien Ende in den Auslenkkörper hineinragt, daß jede Frässpindel unter Zwischenschaltung einer axialbeweglich geführten biegsamen Welle mit einer Abgangswelle des Getriebegehäuses verbunden und in einer im Auslenkkörper radial beweglich gelagerten Lagerhülse aufgenommen ist, und daß durch eine nach dem Aufsetzen des Zentrierstückes auf der Grundfläche der Senkbohrung erfolgende axiale Relativbewegung zwischen dem Getriebegehäuse und dem Zwischenstück im Rahmen eines vorgebbaren Hubes die Steuerstange relativ zum Auslenkkörper axial verschiebbar ist, wodurch die Frässpindeln im Bereich des Auslenkkörpers gleichzeitig radial nach außen bewegbar sind.

Das Getriebe versetzt alle Frässpindeln mit dem jeweils daran befestigten Fräser in Drehbewegung. Während der Drehbewegung erfolgt eine lineare Verschiebung des Getriebegehäuses und über die Steuerstange eine Vorschubbewegung der Fräser in radialer Richtung bis zum Erreichen der vorgebbaren Tiefe der Grübchen. Die flexiblen Kupplungen erlauben ein Auslenken der Frässpindeln.

Vorzugsweise ist eine zentrale Getriebewelle mit einem zu einem Dreh- bzw. Linearantrieb für die Einrichtung führenden Kupplungsstück verbunden. Eine weitere Ausgestaltung sieht vor, daß der Hub zwischen dem Gehäuse und dem Zwischenstück durch einen Anschlag begrenzt ist, wobei die Hubbewegung unter Überwindung einer Gegenkraft erfolgt.

Die Gegenkraft bewirkt ein selbsttätiges Zurückfahren des Getriebegehäuses und damit auch der Steuerstange in ihre Ausgangsstellung.

Die Steuerstange ist vorzugsweise mit wenigstens einer im Querschnitt V-förmigen Ringnut versehen, wobei jeweils einer Lagerhülse der Frässpindel eine Anzahl der Ringnuten entsprechende Anzahl Steuernocken zugeordnet sind, die einen die Steuerstange führenden Käfig radial durchsetzen.

Mit dieser kompakten Bauweise gelingt auf engstem Raum eine zuverlässige Steuerung des Bewegungsablaufes.

Zur Erzielung einer exakten Führung weist der Auslenkkörper Radialführungen zur Aufnahme der Lagerhülsen auf, wobei zur axialen Sicherung ein der Lagerhülse zugeordnetes Kugellagergehäuse dient.

Dem Auslenkkörper sind federnd gelagerte Druckstücke zugeordnet, die jeweils einem Widerlager gegenüberliegend angeordnet sind.

Durch die Anfederung erfolgt eine exakte Rückführung der Frässpindeln und damit der Fräser in ihre Ausgangsposition.

Anhand eines Ausführungsbeispiels und der Zeichnungen Figur 1 bis 6 wird die erfindungsgemäße Einrichtung beschrieben.

Dabei zeigt die
- Fig. 1: einen der Senkbohrung zugewandten Teil der Einrichtung in einem Längsschnitt,
- Fig. 1a: einen Schnitt entlang der Linie I-I durch den Bauteil mit der Senkbohrung nach Figur 1,
- Fig. 2: den restlichen Teil der Einrichtung nach der Figur 1 ebenfalls in einem Längsschnitt,
- Fig. 3: eine Ansicht in Pfeilrichtung III der Figur 2,
- Fig. 4: eine Ansicht in Pfeilrichtung IV der Figur 1 unter Weglassung des Bauteils mit der Senkbohrung,
- Fig. 5: einen Schnitt entlang der Linie V-V der Figur 2 und
- Fig. 6: einen Schnitt entlang der Linie VI-VI der Figur 1.

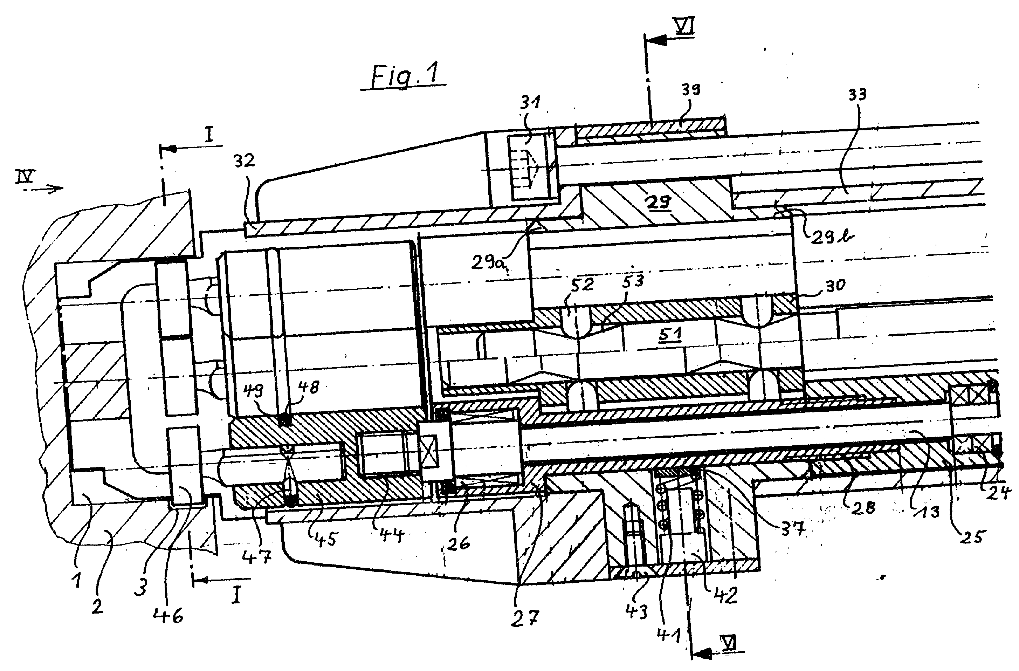

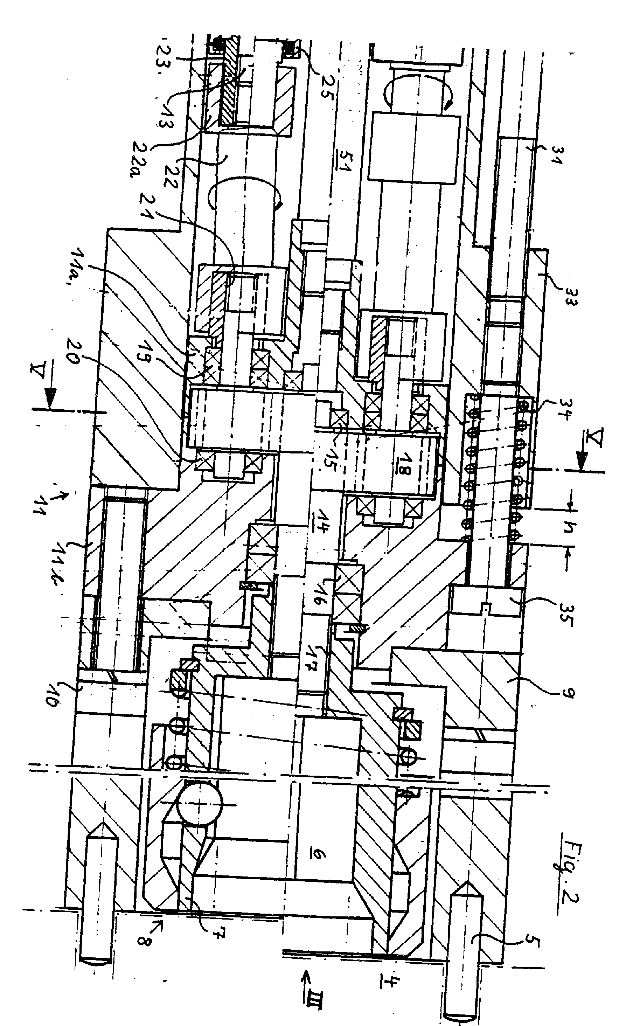

Die Figur 1 zeigt den der Senkbohrung 1 eines Bauteiles 2 zugewandten Teil der Einrichtung, während die Figur 2 in einer Fortführung der Figur 1 den restlichen Teil der Einrichtung darstellt. Wie die Figur 1a, die eine Schnittdarstellung entlang der Linie I-I der Figur 1 lediglich durch den Bauteil 2 zeigt, erkennen läßt, dient die Einrichtung zur Einbringung von Grübchen 3 in die Wandung der Senkbohrung 1. Diese Grübchen sind ca. 3mm tiefe Aussparungen, die beispielsweise zur Sicherung einer in der Bohrung 1 anzuordnenden Schraube dienen. Beim Ausführungsbeispiel sind vier im Abstand von 90° auf dem Umfang verteilte Grübchen eingebracht. Die Figuren 1 und 2 zeigen in der oberen Schnitthälfte die Einrichtung vor dem Beginn des Fräsvorganges und in der unteren Schnitthälfte das Ende des Fräsvorganges, wobei der Fräser die erforderliche Grübchentiefe gerade erreicht hat.

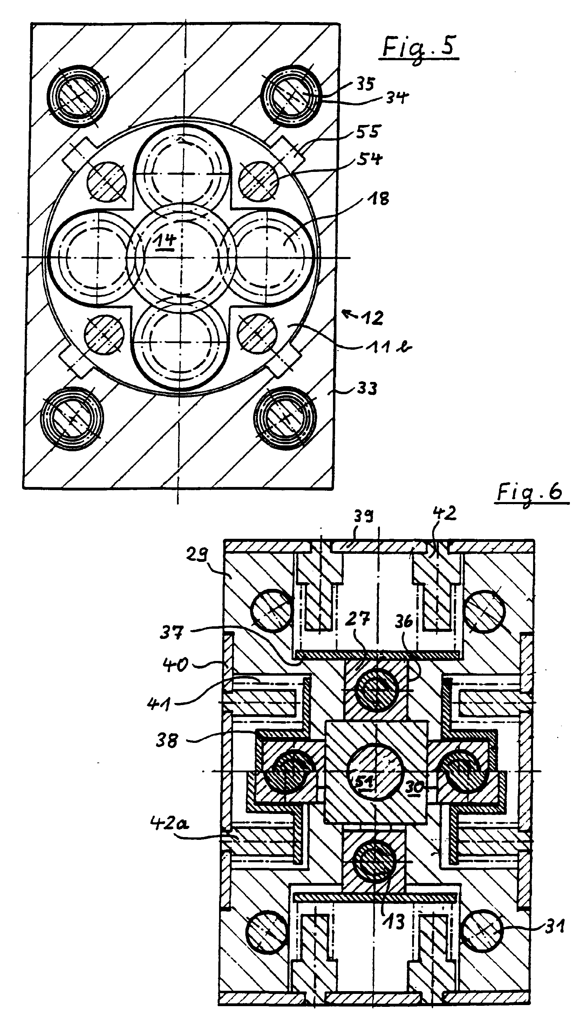

Wie mit strichpunktierten Linien am rechten Rand der Figur 2 angedeutet ist, wird die Einrichtung von Antriebsmitteln 4 getragen, die mit Bohrungen zur Aufnahme der Zentrierstifte 5 und mit einem Zapfen, der in die als Polygon (Figur 3) ausgebildete Aufnahmebohrung 6 eines Kupplungsstückes 7 eingreift, versehen ist. Eine Kugelkupplung 8 dient der Arretierung. Ein das Kupplungsstück 6 übergreifendes und die Zentrierstifte 5 tragendes Anschlußstück 9 ist mittels Schrauben 10 mit einem aus zwei Gehäuseschalen 11a, 11b bestehenden Getriebegehäuse 11 verbunden, das ein Getriebe 12 (Figur 5) zur Übertragung der Drehbewegung des Kupplungsstückes 7 auf vier 90° zueinander versetzt angeordnete Frässpindeln 13 aufnimmt. Eine zentrale Getriebewelle 14 ist über Kugellager 15 in der linken Gehäuseschale 11a und über ein Kugellager 16 in der rechten Gehäuseschale 11b abgestützt. Zwischen der Getriebewelle 14 und dem Kupplungsstück 7 besteht eine Gewindeverbindung 17, die eine spielfreie Übertragung einer Dreh- und/oder Linearbewegung des Kupplungsstückes 7 sicherstellt. In die Verzahnung der zentralen Getriebewelle 14 greifen vier 90° zueinander versetzte Zahnräder 18 ein, deren Wellenstümpfe über Kugellager 19 in der linken Gehäuseschale 11a und über Kugellager 20 in der rechten Gehäuseschale 11b abgestützt sind. Die die linke Gehäuseschale 11a durchsetzenden Wellenstümpfe sind mit einem Gewinde 21 versehen, über welches mit einer biegsamen Welle 22 eine starre Verbindung hergestellt wird. Das der linken Gehäuseschale 11a abgewandten Ende der biegsamen Welle 22 übegreift in Form einer Polygon-Schiebeverbindung eine mit einem Innengewinde versehene Hülse 23, in deren Innengewinde die Frässpindel 13 eingeschraubt ist. Die Frässpindel 13 ist über ein Kugellager 24 in einem Kugellagergehäuse 25 und über ein Nadellager in einer Lagerbüchse 27 abgestützt. Das Kugellagergehäuse 25 übergreift die Lagerhülse 27 in Form einer Gewindeverbindung 28, die gleichzeitig zur Einstellung eines Spiels gegenüber einem Auslenkkörper 29 und einem Käfig 30 dient. Im Zusammenhang mit der Figur 6 ist der Auslenkkörper 29 besser zu erkennen. Er ist über mehrere Schrauben 31 zwischen einem Zentrierstück 32 und einem Zwischenstück 33 eingespannt.

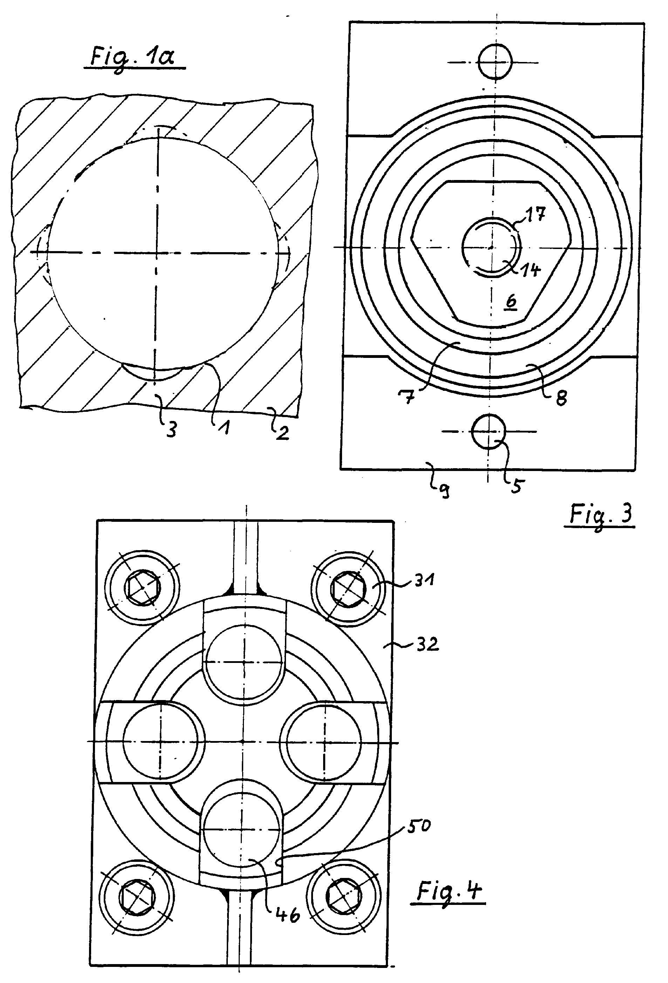

Das Zwischenstück 33 übergreift in einer Art Kolben-/Zylinderverbindung das Getriebegehäuse 11 und ist mit diesem unter Zwischenschaltung jeweils einer Schraubenfeder 34 mit mehreren Schrauben 35 unter Belassung eines Hubes "h" verbunden. Der Auslenkkörper 29 weist zwei im Querschnitt kreisförmige Vorsprünge 29a und 29b auf, die als Zentrierung gegenüber dem Zwischenstück 33 und dem Zentrierstücke 32 dienen. Das Zentrum des Auslenkkörpers ist derart ausgespart, daß es den einen quadratischen Querschnitt aufweisenden Käfig 30 aufnehmen kann. Von diesem frei gearbeiteten Zentrum aus sind 90° zueinander versetzt Schlitze 36 eingearbeitet, in denen sich jeweils eine in ihrer Außenkontur an die Schlitzform angepaßte Lagerhülse 27 radial gleitend bewegen kann. Druckstücke 37, 38 begrenzen mit Hilfe von an Widerlagern 39, 40 anliegenden Druckfedern 41 den Weg der Lagerhülsen 37. Federführungsbolzen 42, 42a sind in den Widerlagern eingelassen. Die Widerlager sind mit Senkschrauben 43 mit dem Auslenkkörper verbunden. Die die Lagerhülsen 27 durchsetzenden Frässpindeln 13 führen die gleitende Auslenkbewegung der Lagerhülsen 27 mit aus. Die jeweilige Frässpindel ist über eine Gewindeverbindung 44 starr mit einem Aufnahmeteil 45 für einen Fräser 46 verbunden. Der Fräser ist über Druckstücke 47, die von einer Federschnüre 48 in einer Ringnut 49 gedrückt werden, gehalten. Die Figur 4 läßt erkennen, daß auch das Zentrierstück 32 Aussparungen 50 aufweist, die eine Radialbewegung der Fräser erlauben. Gesteuert wird die Verschiebewegung der Lagerhülsen 27 durch eine Steuerstange 51, die in die linke Gehäuseschale 11a eingeschraubt ist und sich durch den Käfig 30 erstreckt. Die Wandung des Käfigs ist von Steuernocken 52 durchsetzt, die über eine V-förmig eingearbeitete Ringnut 53 der Steuerstange in radialer Richtung bewegbar sind. Die Gehäuseschalen 11, 11a sind über Schrauben 54 (FIgur 5) verbunden. Eine ebenfalls in der Figur 5 gezeigte Nut-/Federverbindung 55 dient als Verdrehsicherung zwischen dem Gehäuse 11 und dem Zwischenstück 33.

Die Funktion der Einrichtung wird nachfolgend erläutert. Durch die strichpunktiert angedeuteten Antriebsmittel 4 wird das Kupplungsstück 7 in Drehung versetzt, so daß diese Drehbewegung über das Getriebe 12 auf die Frässpindel 13 übertragen wird. Gleichzeitig erfolgt eine lineare Bewegung des Kupplungsstückes 7 und damit der gesamten Einrichtung bis zum Anlaufen der Stirnseite des Zentrierstückes 32 an die Grundfläche der Senkbohrung. Jetzt bewegt sich bei weiterer linearer Bewegung des Kupplungsstückes 7 nur noch das Getriebegehäuse 11, die Steuerstange 51 und die biegsame Welle 22. Diese Relativbewegung erfolgt gegen die Kraft der Druckfeder 34 bis zur Überwindung des Hubes "h" zwischen dem Zwischenstück 33 und dem Getriebegehäuse 11. Die lineare Bewegung der biegsamen Welle 22 wird relativiert durch die Polygon-Schiebeverbindung zwischen der Hülse 23 und der sie übergreifenden Nabe 22a der biegsamen Welle 22. Die V-förmige Ringnut 53 der Steuerstange 51 führt während der vorgehend erwähnten Relativbewegung zu einer kontinuierlichen Radialbewegung der Steuernocken. Sie schieben dabei gleichzeitig alle vier Lagerhülsen 27 zusammen mit den Frässpindeln 13 und den Fräsern 46 nach außen. Dabei sind der Hub "h" und die Steigung der V-förmigen Ringnut derart eingestellt, daß nach Überwindung des Hubes die vorgegebene Frästiefe der Grübchen erreicht ist. Beim linearen Zurückfahren des Kupplungsstückes 7 fahren die Steuernocken wieder in ihre ursprüngliche Position zurück, wobei die Druckfedern zuverlässig die Lagerhülsen 27 nachführen. Die zwischen dem Gehäuse und dem Zwischenstück 33 angeordneten Druckfedern 34 unterstützen die Herstellung des ursprünglichen Hubabstandes "h". Eine Beschädigung der Fräser beim Zurückfahren der Einrichtung ist daher ausgeschlossen.

## Patentansprüche

1. Einrichtung zum Einbringen von mehreren Grübchen (3) in eine zylindrische Wandung einer in einem Bauteil (2) vorgesehenen Senkbohrung (1) mit einer einen Fräser (46) tragenden Frässpindel (13), die über eine Antriebswelle drehbar ist, sowie mit Antriebsmitteln zur Durchführung einer Linear- und/oder Radialbewegung der Frässpindel, dadurch gekennzeichnet, daß ein Auslenkkörper (29) von einer der Anzahl der gleichzeitig einzubringenden Grübchen (3) entsprechenden Anzahl von planetenartig zu einer zentralen Steuerstange (51) angeordneten Frässpindeln (13) durchsetzt ist, daß der Auslenkkörper mit einem der Senkbohrung (1) zugewandten Zentrierstück (32) und einem der Senkbohrung abgewandten Zwischenstück (33) verbunden ist, das seinerseits mit einem Getriebegehäuse (11) eine Art Zylinder-/Kolbenverbindung eingeht, daß die Steuerstange (51) mit ihrem einen Ende am Getriebegehäuse (11) befestigt ist und mit ihrem anderen freien Ende in den Auslenkkörper (29) hineinragt, daß jede Frässpindel unter Zwischenschaltung einer axialbeweglich geführten biegsamen Welle (22) mit einer Abgangswelle des Getriebegehäuses verbunden und in einer im Auslenkkörper (29) radial beweglich gelagerten Lagerhülse (27) aufgenommen ist und daß durch eine nach dem Aufsetzen des Zentrierstückes (32) auf der Grundfläche der Senkbohrung (1) erfolgende axiale Relativbewegung zwischen dem Getriebegehäuse und dem Zwischenstück im Rahmen eines vorgebbaren Hubes die Steuerstange relativ zum Auslenkkörper axial verschiebbar ist, wodurch die Frässpindeln im Bereich des Auslenkkörpers gleichzeitig radial nach außen bewegbar sind.

2. Einrichtung nach Anspruch 1, dadurch gekennzeichnet, daß eine zentrale Getriebewelle mit einem zu einem Drehantrieb für die Einrichtung führenden Kupplungsstück (7) verbunden ist.

3. Einrichtung nach Anspruch 1 oder 2, dadurch gekennzeichnet, daß der Hub "h" zwischen dem Getriebegehäuse (11) und dem Zwischenstück (33) durch einen Anschlag begrenzt ist, wobei die Hubbewegung unter Überwindung einer Gegenkraft erfolgt.

4. Einrichtung nach einem der Ansprüche 1 bis 3, dadurch gekennzeichnet, daß die Steuerstange (51) mit wenigstens einer im Querschnitt V-förmigen Ringnut (53) versehen ist, und daß jeweils einer Lagerhülse (27) der Frässpindel (13) eine Anzahl der Ringnuten entsprechende Anzahl Steuernocken zugeordnet sind, die einen die Steuerstange führenden Käfig (30) radial durchsetzen.

5. Einrichtung nach einem der Ansprüche 1 bis 4, dadurch gekennzeichnet, daß der Auslenkkörper (29) Radialführungen zur Aufnahme der Lagerhülsen (27) aufweist und daß zur axialen Sicherung ein der Lagerhülse (27) zugeordnetes Kugellagergehäuse dient.

6. Einrichtung nach einem der Ansprüche 1 bis 5, dadurch gekennzeichnet, daß dem Auslenkkörper federnd gelagerte Druckstücke zugeordnet sind, die jeweils einem Widerlager gegenüberliegend angeordnet sind.

## Claims

1. Device for inserting a plurality of dimples (3) in a cylindrical wall of a counterbore (1) provided in a component (2), having a milling spindle (13), which carries a milling cutter (46) and can be rotated via a drive shaft, and also drive means for performing a linear and/or radial movement of the milling spindle, characterized in that a number of milling spindles (13) corresponding to the number of dimples (3) to be inserted simultaneously and arranged planet-like relative to a central control rod (51) pass through a deflection body (29), in that the deflection body is connected to a centring piece (32) facing the counterbore (1) and to an intermediate piece (33) remote from the counterbore, which intermediate piece (33) in turn makes a type of cylinder/piston connection with a gear housing (11), in that the control rod (51) is fastened with one of its ends to the gear housing (11) and projects with its other free end into the deflection body (29), in that each milling spindle is connected to an output shaft of the gear housing with a flexible shaft (22), guided in an axially movable manner, in between and is accommodated in a bearing sleeve (27) mounted in a radially movable manner in the deflection body (29), and in that the control rod can be displaced axially relative to the deflection body by an axial relative movement, taking place after the centring piece (32) comes down on the base surface of the counterbore (1), between the gear housing and the intermediate piece in the course of a predeterminable stroke, as a result of which the milling spindles can be simultaneously moved radially outwards in the area of the deflection body.

2. Device according to Claim 1, characterized in that a central gear shaft is connected to a coupling piece (7) leading to a rotary drive for the device.

3. Device according to Claim 1 or 2, characterized in that the stroke "h" between the gear housing (11) and the intermediate piece (33) is limited by a stop, the stroke movement taking place while overcoming a counter-force.

4. Device according to one of Claims 1 to 3, characterized in that the control rod (51) is provided with at least one annular groove (53) V-shaped in cross-section, and in that a number of cams corresponding to the number of annular grooves are allocated in each case to a bearing sleeve (27) of the milling spindle (13), which cams pass radially through a cage (30) guiding the control rod.

5. Device according to one of Claims 1 to 4, characterized in that the deflection body (29) has radial guides for accommodating the bearing sleeves (27), and in that a ball-bearing housing allocated to the bearing sleeve (27) serves as an axial-securing means.

6. Device according to one of Claims 1 to 5, characterized in that spring-mounted thrust pieces are allocated to the deflection body, which thrust pieces are each arranged opposite an abutment.

## Revendications

1. Dispositif pour réaliser plusieurs logements (3) de petite dimension dans une paroi cylindrique d'un chambrage (1) prévu dans une pièce (2), comportant une broche porte-fraise (13) qui porte une fraise (46) et peut être entraînée en rotation par un arbre d'entraînement ainsi que des moyens d'entraînement pour imprimer un mouvement linéaire et/ou radial à la broche porte-fraise, caractérisé par le fait qu'un organe repousseur (29) est traversé par un nombre de broches porte-fraise (13) égal au nombre de logements (3) à réaliser qui sont disposées de manière planétaire par rapport à une tige de commande (51) centrale, par le fait que l'organe repousseur est lié à un élément de centrage (32) côté chambrage (1) et à une pièce intermédiaire (33) côté éloigné du chambrage, qui forme avec un carter de mécanisme à engrenages (11) une sorte d'ensemble cylindre/piston, par le fait que la tige de commande (51) est fixée par l'une de ses extrémités au carter de mécanisme à engrenages (11) et pénètre par son autre extrémité libre dans l'organe repousseur (29), par le fait que chaque broche porte-fraise est liée à un arbre de sortie du carter de mécanisme à engrenages par l'intermédiaire d'un arbre flexible (22) guidé avec possibilité de déplacement axial et est montée dans un manchon formant palier (27) mobile radialement dans l'organe repousseur et par le fait que par un déplacement axial relatif entre le carter de mécanisme à engrenages et la pièce intermédiaire, qui a lieu dans le cadre d'une course prédéterminée après avoir amené l'élément de centrage (32) en contact avec le fond du chambrage (1), la tige de commande peut être déplacée axialement par rapport à l'organe repousseur permettant ainsi de déplacer radialement en direction de l'extérieur la broche porte fraise dans la région de l'organe repousseur..

2. Dispositif selon la revendication 1, caractérisé par le fait qu'un arbre central est lié à un élément d'accouplement (7) menant à un mécanisme d'entraînement du dispositif.

3. Dispositif selon la revendication 1 ou 2, caractérisé par le fait que la course "h" entre le carter de mécanisme à engrenages (11) et l'élément intermédiaire (33) est limitée par une butée, le déplacement ayant lieu à l'encontre d'une force antagoniste.

4. Dispositif selon l'une des revendications 1 à 3, caractérisé par le fait que la tige de commande (51) est pourvue d'au moins une gorge annulaire (53) à section en V et par le fait qu'à un manchon formant palier (27) de la broche porte-fraise (13) sont associées chaque fois des cames de commande en nombre égal aux gorges annulaires qui traversent radialement une cage (30) de guidage de la tige de commande.

5. Dispositif selon l'une des revendications 1 à 4, caractérisé par le fait que l'organe repousseur (29) présente des passages radiaux destinés à recevoir les manchons formant palier (27) et par le fait qu'un corps de roulement à billes associé au manchon formant palier (27) assure le blocage dans la direction axiale .

6. Dispositif selon l'une des revendications 1 à 5, caractérisé par le fait que des éléments presseurs montés sur ressorts, disposés chacun en regard d'une butée, sont associés à l'organe repousseur.
